# EUROPÄISCHE PATENTSCHRIFT

(11) **EP 1 078 670 B1**
(45) Veröffentlichungstag und Bekanntmachung des Hinweises auf die Patenterteilung: **13.04.2005**
(21) Anmeldenummer: 00116762.6
(22) Anmeldetag: 03.08.2000
(51) Int. Cl.: B01D 19/00, D21D 5/26

(54) **Verfahren zum Entgasen eines flüssigen oder pastösen Mediums in einer Maschine zum Herstellen oder/und Veredeln einer Materialbahn, insbesondere aus Papier oder Karton**
Process for degasing a liquid or pasty medium in an apparatus for producing and/or finishing a material web, especially of paper or cardboard
Procédé de dégazage d'une matière liquide ou pâteuse dans un dispositif pour la fabrication et/ou le finissage d'une bande de matériau, notamment en papier ou carton

(30) Priorität: 19.08.1999 DE 19939275
(43) Veröffentlichungstag der Anmeldung: 28.02.2001
(73) Patentinhaber: Voith Paper Patent GmbH, 89522 Heidenheim (DE)
(72) Erfinder: Hoferer, Andreas, 89522 Heidenheim (DE)
(74) Vertreter: Jantsch, Sigrid

(56) Entgegenhaltungen:
- DE-A- 2 353 713
- GB-A- 2 008 971
- US-A- 4 908 048

## Beschreibung

Die Erfindung betrifft ein Verfaren zum Entgasen eines flüssigen oder pastösen Mediums in einer Maschine zur Herstellung oder/und Veredelung einer Materialbahn, insbesondere aus Papier oder Karton.

Eine dabei einsetz bore Vorrichtung ist beispielsweise aus der Dissertation von Dipl.-Ing. Günter Schädel mit dem Titel "Eine Zentrifuge zum Abscheiden kleiner Gasblasen aus hochviskosen Flüssigkeiten" (Fakultät für Chemieingenieurwesen der Universität Fridericana Karlsruhe, 1979; Universitätsbibliothek Karlsruhe 79 DA 30 C) bekannt. Bei dieser zentrifugen-artig arbeitenden Vorrichtung wird das zu entgasende Medium der Innenwandung eines sich drehenden Behälters zugeführt. Dabei bedeckt das Medium die Innenwandung jedoch lediglich als dünner Film. Dies hat zur Konsequenz, daß die bekannte Vorrichtung bei vorgegebener Qualität der Entgasung sowie vorbestimmter Menge von pro Zeiteinheit zu entgasendem Medium unverhältnismäßig viel Bauraum erfordert. Die von Schädel vorgeschlagene Vorrichtung hat sich daher in der Praxis nicht durchgesetzt.

Vielmehr wurden im Stand der Technik zur Entgasung von flüssigen oder pastösen Medien herkömmlich Zyklone eingesetzt (siehe beispielsweise EP 0 618 012 A1 und US 5,080,792). Bei derartigen Zyklonen wird das zu entgasende Medium exzentrisch in einen feststehenden Behälter eingeleitet, so daß sich im Innenraum des Behälters eine Wirbelbewegung des Mediums einstellt. Die durch diese Wirbelbewegung hervorgerufene Zentrifugalkraft sorgt unter Ausnutzung der Dichteunterschiede zwischen dem flüssigen oder pastösen Medium einerseits und dem darin eingeschlossenen Gas andererseits für eine Entmischung von Medium und Gas. Nachteilig ist dabei jedoch, daß die diese Entmischung herbeiführende Kraft von der kinetischen Energie des zuströmenden Mediums aufgebracht werden muß, was zu einem hohen Druckabfall bzw. Druckverlust an dem Zyklon führt. Zum Ausgleich dieses Druckverlusts müssen daher zur Förderung des zu entgasenden Mediums entsprechend leistungsstarke Pumpen vorgesehen sein.

Ein Verfahren gemäß dem Oberbegriff von Anspruch 1 offenbart die Schrift GB-A-2 008 971.

Aufgabe der vorliegenden Erfindung ist es daher, eine Entgasungsvorrichtung der gattungsgemäßen Art anzugeben, welche bei geringem Bedarf an Baumraum in der Lage ist, pro Zeiteinheit auch große Mengen an flüssigem oder pastösem Medium zu einem für die Praxis ausreichenden Grade zu entgasen, wobei sie allenfalls einen ein tolerierbares Maß nicht übersteigenden Druckabfall verursacht.

Diese Aufgabe wird erfindungsgemäß durch eine Entgasungsverfahren gemäß Anspruch 1 gelöst. Die Verwendung einer Tauchrohranordnung mit wenigstens einem Tauchrohr zur Entnahme der gasreichen Fraktion aus dem rotierendem Behälter ermöglicht eine gezielte Abführung dieser gasreichen Fraktion unabhängig von den Betriebsbedingungen (Drehzahl) sowie den konstruktiven Gegebenheiten (Wandhöhe und -neigung) des rotierenden Behälters. Die Menge an pro Zeiteinheit abgeführter gasreicher Fraktion kann durch Wahl des Tauchrohr-Durchmessers sowie gegebenenfalls durch Verändern der Saugleistung einer Pumpe, die an die Tauchrohranordnung angeschlossen sein kann, beeinflusst werden. Darüber hinaus kann durch die Tauchrohranordnung zur Unterstützung der Entmischung im Medium lokal ein Unterdruck aufgebracht werden. Somit kann durch eine dem jeweiligen Medium angepasste Einstellung der Betriebsparameter des Behälters sowie der Entnahmeparameter an der Tauchrohranordnung die Entgasungsqualität verbessert werden. Dabei wird die Tauchrohranordnung zumindest in der Nähe der Drehachse des Behälters angeordnet, um eine Rührwirkung und eine damit einhergehende erneute Vermischung von gasreicher und gasarmer Fraktion vermeiden zu können.

In weiterbildung des erfindungsgemäßen Verfahrens werden nach folgend vorteilhafte Ausgestaltungen der verwendeten Entgasungsvorrichtung beschrieben.

Der Eintrittsöffnung der Tauchrohranordnung kann eine Gitterstruktur zugeordnet, die sich vorzugsweise über eine vorbestimmte Distanz in Richtung der Abführung der gasreichen Fraktion erstreckt. Dies bietet die Möglichkeit, die Umhüllung von in der gasreichen Fraktion enthaltenen Gasblasen bereits beim Durchtritt durch die Gitterstruktur zu brechen und dadurch die Trennung von Medium und Gas zu erleichtern bzw. zu beschleunigen.

Um die Vorrichtung mit einem möglichst geringen Verlust an Medium betreiben zu können, kann die Gasabführvorrichtung die gasreiche Fraktion des Medium zu einem Sammelbehälter führen, aus dem wiederum die Mediumzuführvorrichtung gespeist wird.

Eine Eintrittsöffnüng der Mediumabführvorrichtung kann sich im wesentlichen über den gesamten Umfang des Behälters erstrecken. Dies ist vorteilhaft, weil dadurch pro Zeiteinheit im Vergleich zu einer lokal konzentrierten Mediumabführung eine größere Menge gasarmen Mediums abgeführt werden kann.

Weiterhin kann die Mediumabführvorrichtung eine Mehrzahl von Leitschaufeln aufweisen, welche gemeinsam mit dem Behälter drehbar sind. Mittels dieser Leitschaufeln wird die Strömung der den Behälter durch die Austrittsöffnung verlassenden, gasarmen Fraktion beeinflußt. Die Leitschaufeln bewirken in dem strömenden Medium, auf das sie einwirken, eine Reduzierung des Turbulenzgrads. Vorzugsweise befindet sich das Medium, nachdem es die Leitschaufeln passiert hat, in einem laminaren Strömungszustand. Dadurch kann die Neigung des Mediums zur strömungsinduzterten Blasenbildung nach dem Passieren der Leitschaufeln verringert werden, was sich positiv auf das Entgasungsergebnis auswirkt.

Der rotierende Behälter kann konstruktiv so ausgeführt sein, daß er sich von einer Austrittsöffnung der Mediumzuführvorrichtung in den Behälter zu einer Eintrittsöffnung der Mediumabführvorrichtung aus dem Behälter hin, vorzugsweise konisch erweitert. Da die im Inneren des rotierenden Behälters auf das Medium wirkenden Zentrifugalkräfte in radialer Richtung linear ansteigen, kann durch eine derartige Erweiterung des Behä!ters die Entmischungswirkung insbesondere im Bereich des Austritts der gasarmen Fraktion aus dem Behälter verstärkt werden.

Um schwerkraftbedingte Asymmetrien der auf das Medium einwirkenden Kräfte im Inneren des Behälters vermeiden zu können, kann der Behälter vorteilhafterweise so angeordnet sein, daß seine Drehachse im Betrieb im wesentlichen vertikal verläuft. Um darüber hinaus unerwünschte Belastungen der Vorrichtung aufgrund deren Betriebs, beispielsweise aufgrund von Unwuchten, mindern zu können, ist es vorteilhaft, wenn die Drehachse des Behälters durch dessen Innenraum verläuft. Eine noch stärkere Reduzierung der zuvor genannten Belastungen kann dadurch erreicht werden, daß der Behälter im wesentlichen rotationssymmetrisch ausgebildet ist und daß die Rotationssymmetrieachse des Behälters mit seiner Drehachse im wesentlichen zusammenfällt.

Zur weiteren Verbesserung des Ergebnisses der Entgasung des Mediums kann die Austrittsöffnung der Mediumzuführvorrichtung im Betrieb des Behälters an dessen unterem Ende angeordnet sein, während die Eintrittsöffnung der Mediumabführvorrichtung an dessen oberen Ende angeordnet sein kann. Hierdurch können ferner die Verweildauer des Mediums im Behälter und damit die Qualität der Entgasung erhöht werden, da das Medium bei dieser Anordnung auf seinem Weg von der Mediumzuführvorrichtung zur Mediumabführvorrichtung des Behälters von der Schwerkraft verzögert wird.

Ein besonders gutes Entgasungsergebnis kann mit Behältern erzielt werden, die einen Durchmesser von ca. 40 cm aufweisen und mit einer Drehzahl von etwa 300 - 3000 U/min, vorzugsweise mit einer Drehzahl von etwa 2000 U/min, betrieben werden. Beim Betrieb der Entgasungsvorrichtung kann der Füllungsgrad des Behälters bis zu etwa 20 % betragen, um einen effektiven Betrieb der Anlage, vor allem im Hinblick auf die Gasabführvorrichtung, gewährleisten zu können.

Schädel weist in seiner Disseration ausdrücklich darauf hin, daß das zu entgasende Medium bei Einsatz einer Zentrifuge dem Fliehkraftfeld nur als dünner Film auf der Innenwandung des Zentrifugenbehälters ausgesetzt werden darf. Als Grund gibt Schädel an, daß mit einer Zunahme der Schichtdicke des Mediums auch der in dem Medium herrschende fliehkraftbedingte, hydrostatische Druck ansteige, insbesondere in den wandnahen Bereichen der Schicht. Dies mindere zum eine die Aufstiegsgeschwindigkeit der Gasbläschen und führe zum anderen dazu, daß sich ein Teil des Gases wieder physikalisch in dem Medium löse.

Es ist das Verdienst des Erfinders, sich über dieses seit 20 Jahren in der Fachwelt bestehende Vorurteil hinweggesetzt zu haben. Eine Erhöhung des Füllungsgrades des Zentrifugenbehälters führt, gleiche Durchsatzmenge pro Zeiteinheit unterstellt, aufgrund der Pufferwirkung des Behältervolumens zu einer Erhöhung der Verweildauer des Mediums in dem Behälter. Dies wirkt sich auf die Qualität der Entgasung günstig aus.

Die Erfindung wird im folgenden an einem Ausführungsbeispiel anhand der beigefügten Zeichnung näher erläutert werden. Es stellt dar:

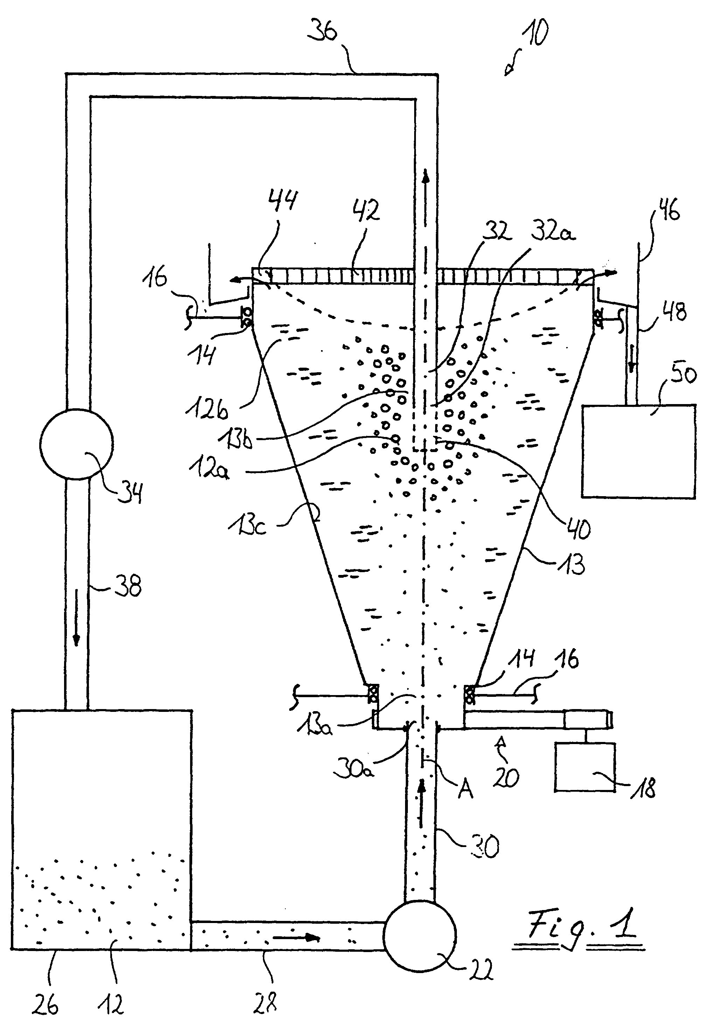

- Fig. 1: eine grob-schematische Querschnittsansicht der erfindungsgemäßen Vorrichtung.

In Fig. 1 ist eine erfindungsgemäße Vorrichtung zum Entgasen eines flüssigen oder pastösen Mediums 12 allgemein mit 10 bezeichnet. Die Vorrichtung 10 umfaßt einen Behälter 13, der über Lager 14 drehbar in einem Gestell bzw. Gehäuse 16 befestigt ist. Ein Motor 18 sowie ein Riemengetriebe 20 dienen als Drehantrieb des Behälters 13. Der Behälter 13 ist rotationssymmetrisch ausgeführt, wobei seine Symmetrieachse mit der im wesentlichen vertikal verlaufenden Drehachse A zusammenfällt ist. Eine Pumpe 22 fördert das zu entgasende Medium 12 aus einem Reservoir 26 über die Leitungen 28 und 30 in den Behälter 13. Die Austrittsöffnung 30a der Leitung 30 ist am unteren Ende 13a des Behälters 13 zentrisch angeordnet.

Unter der Wirkung der von der Rotation des Behälters 13 herrührenden Zentrifugalkraft wird das dem Behälter 13 zugeführte zu entgasende Medium 12 in einen gasreichen Anteil 12a und einen gasarmen Anteil 12b fraktioniert. Zur Abführung der gasreichen Fraktion 12a, die sich in der Nähe der Rotationsachse A anreichert, ist am oberen Ende 13b des Behälters 13 ein Tauchrohr 32 koaxial um die Achse A herum angeordnet. An seiner Eintrittsöffnung 32a ist das Tauchrohr 32 mit einer Gitterstruktur 40 versehen, die sich in axialer Richtung des Tauchrohres von der Eintrittsöffnung 32a ausgehend eine vorbestimmte Distanz in das im Behälter 13 befindliche Medium hinein erstreckt und zum Aufbrechen der Umhüllungen der Gasbläschen dient. Eine Pumpe 34 fördert die gasreiche Fraktion 12a über das Tauchrohr 32, die daran anschließende Leitung 36 sowie die Leitung 38 in das Reservoir 26.

Die sich in der Nähe der Innenwand 13c des Behälters 13 befindende gasarme Fraktion 12b wird durch eine sich am oberen Ende 13b des Behälters 13 über dessen gesamten Umfang erstreckende Austrittsöffnung 42 fliehkraftgetrieben aus dem Behälter 13 abgeführt. Zur Reduzierung bzw. vollständigen Kompensation von Strömungsturbulenzen, die auf dem Weg des Mediums durch den Behälter 13 in dem Medium 12 möglicherweise hervorgerufen werden, sind im Bereich der Mediumaustrittsöffnung 42 Leitschaufeln 44 angeordnet, die mit dem Behälter 13 mitrotieren. Die Leitschaufeln 44 sind dabei so angestellt, daß die Strömung der gasarmen Fraktion 12b beim Durchtritt durch die Austrittsöffnung 42 von den Leitschaufeln 44 beruhigt wird, d.h. der Turbulenzgrad der Strömung nimmt ab. Die Neigung zur erneuten Einbringung von Gasblasen in die gasarme Fraktion durch Strömungsturbulenzen wird somit reduziert.

Nach dem Durchtritt durch die Austrittsöffnung 42 gelangt die gasarme Fraktion 12b in eine Auffangvorrichtung 46, aus der sie über eine Leitung 48 beispielsweise in einen Sammelbehälter 50 abgeführt wird.

Zur Erhöhung der Effizienz des Entgasungsvorganges ist der Behälter 13 konstruktiv so ausgeführt, daß er sich von der Austrittsöffnung 30a der Mediumzufuhr ausgehend zur Eintrittsöffnung 42 der Mediumabfuhr hin konisch erweitert.

Wie in Fig. 1 angedeutet wird der Behälter 13 mit einem relativ hohen Füllungsgrad betrieben. Die gestrichelte Linie im Bereich des oberen Endes des Behälters 13 stellt einen Schnitt durch eine sich in bekannter Weise parabolisch ausbildende Oberfläche einer rotierenden Flüssigkeit dar. Der hohe Füllgrad des Behälters 13 ermöglicht es, das Tauchrohr 32 räumlich von der Austrittsöffnung 30a der Mediumzufuhr zu trennen und dadurch einen strömungsmechanischen "Kurzschluß" zu verhindern. Weiterhin wird durch den hohen Füllgrad die Verweildauer des Mediums 12 im Behälter 13 erhöht, was sich günstig auf das Ergebnis des Entgasungsvorganges auswirkt.

## Patentansprüche

1. Verfahren zum Entgasen eines flüssigen oder pastösen Mediums (12) bei dem in einer Entgasungsvorrichtung (10)
- in einen um eine Drehachse (A) drehenden Behälter (13), über eine Mediumzuführvorrichtung (22/28/30/30a) das zu entgasende Medium (12) eingeleitet wird,
- über eine Mediumabführvorrichtung (42/44/46/48/50) eine gasarme Fraktion des Mediums (12) aus dem Behälter (13) ausgeleitet wird, und
- über eine Gasabführvorrichtung (32/32a/34/36/38/40) zumindest Gas aus dem Behälter (13) ausgeleitet wird, wobei die Gasabführvorrichtung eine Tauchrohranordnung mit wenigstens einem in den Behälter (13) eintauchenden Tauchrohr (32) umfasst, dessen Eintrittsöffnung (32a) der Drehachse (A) des Behälters (13) zumindest benachbart angeordnet ist,
**dadurch gekennzeichnet,**
- **dass** die Entgasungsvorrichtung in einer Maschine zur Herstellung oder/und Veredelung einer Materialbahn, insbesondere aus Papier oder Karton, verwendet wird, und
- **dass** der Behälter (13) mit einem derartig hohen, eine Bedeckung einer Innenwandung des Behälters mit einem Film des Mediums übersteigenden Füllungsgrad bis zu etwa 20% betrieben wird, dass die Gasabführvorrichtung (32/32a/34/ 36/38/40) über das Tauchrohr (32) einen Teil des in den Behälter (13) eingeleiteten flüssigen oder pastösen Mediums (12), nämlich eine gasreiche Fraktion (12a) des Mediums (12), aus dem Behälter (13) ausleitet.

2. Verfahren nach Anspruch 1, **dadurch gekennzeichnet, dass** der Eintrittsöffnung (32a) des wenigstens einen Tauchrohrs (32) eine Gitterstruktur (40) zugeordnet ist, durch die die gasreiche Fraktion (12) aus dem Behälter (13) in das Tauchrohr eintritt.

3. Verfahren nach Anspruch 2, **dadurch gekennzeichnet, dass** die Gitterstruktur (40) sich über eine vorbestimmte Distanz in Richtung der Abführung der gasreichen Fraktion (1 2a) erstreckt.

4. Verfahren nach einem der Ansprüche 1 bis 3, **dadurch gekennzeichnet, dass** die Gasabführvorrichtung (32/32a/34/ 36/38/40) die gasreiche Fraktion (12a) einem Sammelbehälter (26), aus dem die Mediumzuführvorrichtung (22/28/30/30a) gespeist wird, zuführt.

5. Verfahren nach einem der vorstehenden Ansprüche, **dadurch gekennzeichnet, dass** die gasarme Fraktion (12b) durch eine Eintrittsöffnung (42) der Mediumabführvorrichtung (42/44/46/48/50), die sich im wesentlichen über den gesamten Umfang des Behälters (13) erstreckt, aus dem Behälter austritt.

6. Verfahren nach Anspruch 5, **dadurch gekennzeichnet, dass** die Strömung der den Behälter (13) durch die Eintrittsöffnung (42) verlassenden gasarmen Fraktion (12b) durch eine Mehrzahl von Leitschaufeln (44) der Mediumabführvorrichtung (42/44/46/48/50), welche gemeinsam mit dem Behälter (13) drehbar sind, beeinflusst wird.

7. Verfahren nach einem der vorstehenden Ansprüche, **dadurch gekennzeichnet, dass** der Behälter (13) der verwendeten Entgasungsvorrichtung sich von einer Austrittsöffnung (30a) der Mediumzuführvorrichtung (22/28/30/30a) zu einer Eintrittsöffnung (42) der Mediumabführvorrichtung (42/44/46/48/50) hin erweitert, vorzugsweise konisch erweitert.

8. Verfahren nach einem der vorstehenden Ansprüche, **dadurch gekennzeichnet, dass** die Drehachse (A) des Behälters (13)der verwendeten Entgasungsvorrichtung im Betrieb im wesentlichen vertikal angeordnet ist.

9. Verfahren nach einem der vorstehenden Ansprüche, **dadurch gekennzeichnet, dass** die Drehachse (A) des Behälters (13) der verwendeten Entgasungsvorrichtung durch den Innenraum des Behälters (13) verläuft.

10. Verfahren nach Anspruch 9, **dadurch gekennzeichnet, dass** der Behälter (13) der verwendeten Entgasungsvorrichtung im wesentlichen rotationssymmetrisch ausgebildet ist, wobei die Rotationssymmetrieachse des Behälters (13) mit seiner Drehachse (A) im wesentlichen zusammenfällt.

11. Verfahren nach Anspruch 8, **dadurch gekennzeichnet, dass** bei der verwendeten Entgasungsvorrichtung im Betrieb eine Austrittsöffnung (30a) der Mediumzuführvorrichtung (22/28/30/30a) am unteren Ende (13a) des Behälters (13) und eine Eintrittsöffnung (42) der Mediumabführvorrichtung (42/44/46/48/50) am oberen Ende (13b)des Behälters angeordnet ist.

12. Verfahren nach einem der vorstehenden Ansprüche, **dadurch gekennzeichnet, dass** bei der verwendeten Entgasungsvorrichtung der Durchmesser des Behälters (13) etwa 40 cm beträgt, und die Drehzahl des Behälters in einem Bereich von 300 bis 3000 U/min liegt, vorzugsweise bei 2000 U/min liegt.

13. Verfahren nach einem der vorstehenden Ansprüche, **dadurch gekennzeichnet, dass** der Behälter (13) mit einem Füllungsgrad von etwa 20 % betrieben wird.

## Claims

1. Method for degassing a liquid or pasty medium (12) in which, in a degassing apparatus,
- in a vessel (13) rotating about an axis of rotation (A),
- a medium-supply device (22/28/30/30a) is used to introduce the medium (12) to be degassed,
- a medium-discharge device (42/44/46/48/50) is used to discharge a low-gas fraction of the medium (12) out of the vessel (13), and
- a gas-discharge device (32/32a/34/36/38/40) is used to discharge at least gas out of the vessel (13), the gas-discharge device comprising an immersion tube arrangement with at least one immersion tube (32) dipping into the vessel (13), the inlet orifice (32a) of which tube is arranged so as to be at least adjacent to the axis of rotation (A) of the vessel (13),
**characterized**
- **in that** the degassing device is used in a machine for the production and/or upgrading of a material web, in particular made of paper or cardboard, and
- **in that** the vessel (13) is operated with a degree of filling of up to about 20% which rises above a covering of an inner wall of the vessel with a film of the medium and which is such that the gas-discharge device (32/32a/34/36/38/40) discharges from the vessel (13), via the immersion tube (32), a part of the liquid or pasty medium (12) introduced in to the vessel (13), to be precise a gas-rich fraction (12a) of the medium (12).

2. Method according to Claim 1, **characterized in that** the inlet orifice (32a) of the at least one immersion tube (32) is assigned a grid structure (40) through which the gas-rich fraction (12) enters the immersion tube from the vessel (13).

3. Method according to Claim 2, **characterized in that** the grid structure (40) extends over a predetermined distance in the direction of discharge of the gas-rich fraction (12a).

4. Method according to one of Claims 1 to 3, **characterized in that** the gas-discharge device (32/32a/34/36/38/40) supplies the gas-rich fraction (12a) to a collecting vessel (26), from which the medium-supply device (22/28/30/30a) is fed.

5. Method according to one of the preceding claims, **characterized in that** the low-gas fraction emerges from the vessel through an inlet orifice (42) of the medium-discharge device (42/44/46/48/50) which extends essentially over the entire circumference of the vessel (13).

6. Method according to Claim 5, **characterized in that** the flow of the low-gas fraction (12b) leaving the vessel (13) through the inlet orifice (42) is influenced by a plurality of guide vanes (44) of the medium-discharge device (42/44/46/48/50) which are rotatable jointly with the vessel (13).

7. Method according to one of the preceding claims, **characterized in that** the vessel (13) of the degassing apparatus used widens, preferably widens conically, from an outlet orifice (30a) of the medium-supply device (22/28/30/30a) towards an inlet orifice (42) of the medium-discharge device (42/44/46/48/50).

8. Method according to one of the preceding claims, **characterized in that** the axis of rotation (A) of the vessel (13) of the degassing apparatus used is arranged essentially vertically during operation.

9. Method according to one of the preceding claims, **characterized in that** the axis of rotation (A) of the vessel (13) of the degassing apparatus used runs through the interior of the vessel (13).

10. Method according to Claim 9, **characterized in that** the vessel (13) of the degassing apparatus used is designed to be essentially rotationally symmetric, the axis of rotational symmetry of the vessel (13) coinciding essentially with its axis of rotation (A).

11. Method according to Claim 8, **characterized in that**, when the degassing apparatus used is in operation, an outlet orifice (30a) of the medium-supply device (22/28/30/30a) is arranged at the lower end (13a) of the vessel (13) and an inlet orifice (42) of the medium-discharge device (42/44/46/48/50) is arranged at the upper end (30b) of said vessel.

12. Method according to one of the preceding claims, **characterized in that** in the degassing apparatus used the diameter of the vessel (13) is about 40 cm and the rotational speed of the vessel is within a range of 300 to 3000 revolutions per minute, preferably is around 2000 revolutions per minute.

13. Method according to one of the preceding claims, **characterized in that** the vessel (13) is operated with a degree of filling of about 20%.

## Revendications

1. Procédé pour le dégazage d'une matière liquide ou pâteuse (12) dans lequel, dans un dispositif de dégazage (10),
- dans un récipient (13) tournant autour d'un axe (A), la matière à dégazer (12) est introduite par le biais d'un dispositif d'alimentation en matière (22/28/30/30a),
- une fraction pauvre en gaz de la matière (12) est évacuée du récipient (13) par le biais d'un dispositif d'évacuation de matière (42/44/46/48/50) et
- au moins du gaz est évacué du récipient (13) par le biais d'un dispositif d'évacuation de gaz (32/32a/34/36/38/40), le dispositif d'évacuation de gaz comprenant un agencement de tube plongeur avec au moins un tube plongeur (32) plongeant dans le récipient (13), dont l'ouverture d'entrée (32a) est disposée au moins à proximité de l'axe de rotation (A) du récipient (13),
**caractérisé en ce que**
- le dispositif de dégazage est utilisé dans une machine de fabrication et/ou d'amélioration d'une nappe de matériau, en particulier de papier ou de carton, et
- **en ce que** le récipient (13) est utilisé avec un degré de remplissage, jusqu'à environ 20%, dépassant un recouvrement d'une paroi interne du récipient avec un film de matière, si élevé que le dispositif d'évacuation de gaz (32/-32a/34/36/38/40) évacue par le biais du tube plongeur (32) une partie de la matière liquide ou pâteuse (12) introduite dans le récipient (13), à savoir une fraction riche en gaz (12a) de la matière (12), hors du récipient (13).

2. Procédé selon la revendication 1, **caractérisé en ce que** l'on associe à l'ouverture d'entrée (32a) de l'au moins un tube plongeur (32) une structure de grille (40) à travers laquelle la fraction riche en gaz (12) pénètre hors du récipient (13) dans le tube plongeur.

3. Procédé selon la revendication 2, **caractérisé en ce que** la structure de grille (40) s'étend sur une distance prédéterminée dans la direction de l'évacuation de la fraction riche en gaz (12a).

4. Procédé selon l'une quelconque des revendications 1 à 3, **caractérisé en ce que** le dispositif d'évacuation de gaz (32/32a/34/36/38/40) achemine la fraction riche en gaz (12a) à un récipient collecteur (26), à partir duquel le dispositif d'alimentation en matière (22/28/30/30a) est alimenté.

5. Procédé selon l'une quelconque des revendications précédentes, **caractérisé en ce que** la fraction pauvre en gaz (12b) sort du récipient par une ouverture d'entrée (42) du dispositif d'évacuation de matière (42/44/46/48/50), qui s'étend essentiellement sur toute la périphérie du récipient (13).

6. Procédé selon la revendication 5, **caractérisé en ce que** l'écoulement de la fraction pauvre en gaz (12b) quittant le récipient (13) par l'ouverture d'entrée (42) est influencé par une pluralité d'aubes directrices (44) du dispositif d'évacuation de matière (42/44/46/48/50), qui peuvent tourner conjointement avec le récipient (13) .

7. Procédé selon l'une quelconque des revendications précédentes, **caractérisé en ce que** le récipient (13) du dispositif de dégazage utilisé s'élargit depuis une ouverture de sortie (30a) du dispositif d'alimentation en matière (22/28/30/30a) jusqu'à une ouverture d'entrée (42) du dispositif d'évacuation de matière (42/44/46/48/50), de préférence s'élargit sous forme conique.

8. Procédé selon l'une quelconque des revendications précédentes, **caractérisé en ce que** l'axe de rotation (A) du récipient (13) du dispositif de dégazage utilisé est disposé essentiellement verticalement lors du fonctionnement.

9. Procédé selon l'une quelconque des revendications précédentes, **caractérisé en ce que** l'axe de rotation (A) du récipient (13) du dispositif de dégazage utilisé s'étend à travers l'espace interne du récipient (13).

10. Procédé selon la revendication 9, **caractérisé en ce que** le récipient (13) du dispositif de dégazage utilisé est réalisé essentiellement avec une symétrie de révolution, l'axe de symétrie de révolution du récipient (13) coïncidant essentiellement avec son axe de rotation (A).

11. Procédé selon la revendication 8, **caractérisé en ce que** pour le dispositif de dégazage utilisé, lors de l'utilisation, une ouverture de sortie (30a) du dispositif d'alimentation en matière (22/28/30/30a) est prévue à l'extrémité inférieure (13a) du récipient (13) et une ouverture d'entrée (42) du dispositif d'évacuation de matière (42/44/46/48/50) est prévue à l'extrémité supérieure (13b) du récipient.

12. Procédé selon l'une quelconque des revendications précédentes, **caractérisé en ce que** pour le dispositif de dégazage utilisé, le diamètre du récipient (13) mesure approximativement 40 cm, et la vitesse du récipient est comprise dans une plage de 300 à 3000 tr/min, de préférence est de 2000 tr/min.

13. Procédé selon l'une quelconque des revendications précédentes, **caractérisé en ce que** le récipient (13) est utilisé avec un degré de remplissage d'environ 20%.
